**Europäisches Patentamt**

**European Patent Office**

**Office européen des brevets**

(19)

(11) Numéro de publication: **0 201 773 B1**

(12) **FASCICULE DE BREVET EUROPEEN**

(45) Date de publication du fascicule du brevet:
**12.07.89**

(21) Numéro de dépôt: **86105654.7**

(22) Date de dépôt: **24.04.86**

(51) Int. Cl.⁴: **B23H 7/10**

(54) **Procédé pour réenfiler un fil-électrode dans une fente d'usinage et dispositif pour sa mise en oeuvre.**

(30) Priorité: **13.05.85 CH 2031/85**

(43) Date de publication de la demande:
**20.11.86 Bulletin 86/47**

(45) Mention de la délivrance du brevet:
**12.07.89 Bulletin 89/28**

(84) Etats contractants désignés:
**DE FR GB IT**

(56) Documents cités:
**GB-A- 2 066 717**

(73) Titulaire: **CHARMILLES TECHNOLOGIES S.A., rue du Pré-de-la-Fontaine 8-10, CH-1242 Satigny(CH)**

(72) Inventeur: **Girardin, Roger, 8, chemin de l'écharpine, CH-1214 Vernier(CH)**

(74) Mandataire: **Blum, Rudolf Emil Ernst et al, c/o E. Blum & Co Patentanwälte Vorderberg 11, CH-8044 Zürich(CH)**

ACTORUM AG

## Description

Avant de commencer une opération de découpe par électroérosion d'une pièce au moyen d'un fil, il est nécessaire de procéder à l'enfilage de ce fil dans un avant-trou percé préalablement dans la pièce. Ce problème a été résolu au moyen de différents procédés (par exemple GB-A 2 066 717) qui consistent en général à étirer le fil pour le redresser, à le couper en amont de la pièce et à déplacer le bout de fil coupé à travers l'avant-trou jusqu'à sa reprise par le système d'entraînement du fil.

Cependant, pour obtenir une vitesse d'usinage élevée et une grande précision de découpe, le fil subit au cours de l'étincelage des sollicitations thermiques et mécaniques importantes qui peuvent provoquer une rupture accidentelle de ce fil au cours de la découpe. Cette rupture entraîne un arrêt prolongé de l'usinage si elle se produit en l'absence de surveillance, par exemple pendant la nuit. Pour éviter une baisse du rendement économique de la machine, il est nécessaire de procéder à un réenfilage automatique juste après l'incident. Cette seconde opération est beaucoup plus difficile à réaliser que la première du fait que le fil a été déformé lors de sa rupture et qu'il est nécessaire d'éliminer la partie inutilisable du fil qui a été tranchée et qui est comprise entre le point de rupture et l'endroit où il a été coupé après son étirage. Aucune solution industrielle n'a été proposée jusqu'à ce jour pour évacuer ce déchet de fil avant de commencer l'opération de réenfilage après rupture. Le but de l'invention est de remédier à cette lacune.

A cet effet, l'invention est définie comme il est dit aux revendications 1 et 7.

L'invention sera maintenant illustrée par des exemples de réalisation et à l'aide du dessin, dans lequel

la figure 1 montre le schéma général d'une installation de découpage par fil comportant un dispositif selon l'invention,

les figures 2 et 3 montrent deux réalisations du dispositif pour l'évacuation du morceau de fil inutilisable.

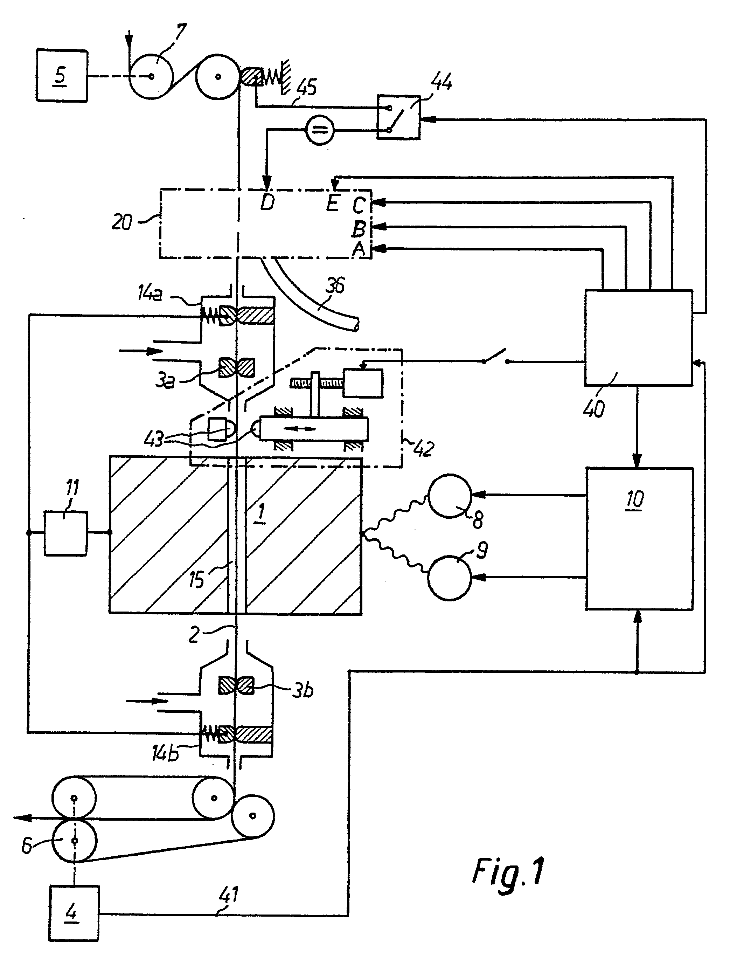

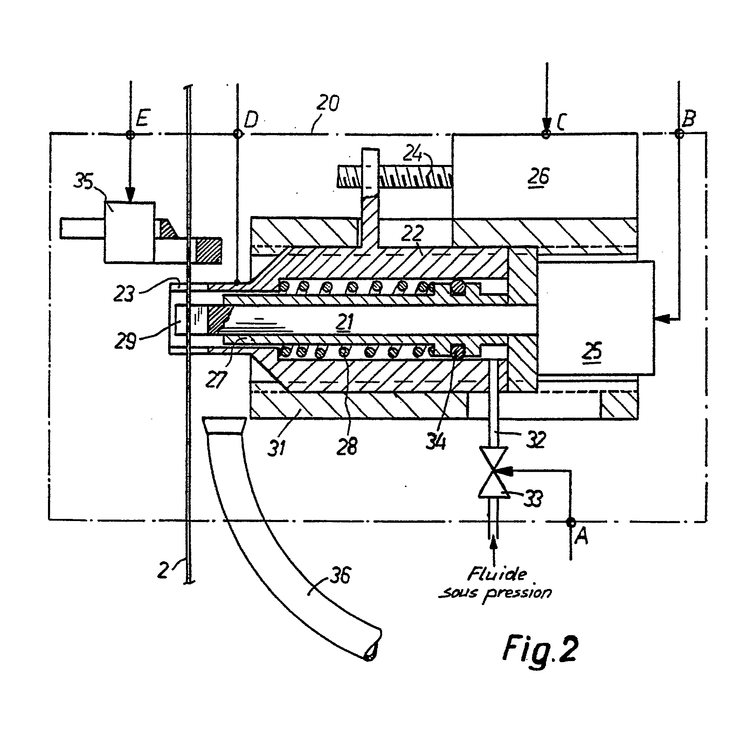

La figure 1 montre schématiquement une forme de réalisation de l'invention où 1 est la pièce à découper et 2 le fil-électrode servant à ce découpage, tendu entre un guide supérieur 3a et un guide inférieur 3b. Comme il est d'usage, un moteur 4 entraîne le fil longitudinalement par l'intermédiaire de rouleaux 6 tandis qu'un moteur-couple de freinage 5 agit sur une poulie-frein 7 pour maintenir le fil à une tension prédéterminée. Des moteurs 8 et 9 commandés par une commande numérique 10 meuvent la pièce 1 par l'intermédiaire d'une table à mouvements croisés (non montrée au dessin) de manière à obtenir la découpe voulue. Un générateur d'impulsions, 11 - pour produire l'étincelage entre le fil et la pièce - est relié électriquement au fil, par une de ses bornes en amont et en aval de la zone d'usinage et à la pièce 1 par l'autre de ces bornes. Finalement, deux têtes d'injection 14a et 14b comportent chacune un carénage entourant un des guides ainsi qu'un contact d'amenée des impulsions. Un liquide d'usinage entre comme indiqué par les flèches dans les têtes d'injection qui le canalisent vers la fente 15 découpée dans la pièce par le fil 2. Au-dessus de la tête d'injection supérieure un pointillé 20 indique l'emplacement d'un dispositif d'évacuation du bout de fil inutilisable, dispositif repris à plus grand échelle à la figure 2. Dans cette figure, 2 représente à nouveau le fil à découper. Celui-ci traverse la fente (29) d'un arbre fendu 21 entraîné par un moteur 25 de manière à tourner à l'intérieur d'un tube 22 comportant également une fente 23 à son extrémité. Le tube et le moteur 25 solidaire avec lui peuvent être déplacés longitudinalement au moyen d'une vis motorisée 24 entraînée par un second moteur 26 qui fait coulisser le tube 22 dans un logement 31. Entre l'axe fendu 21 et le tube 22 se trouve un manchon d'évacuation 27 mobile longitudinalement par rapport à ces pièces. En position de repos, un ressort 28 repousse ce manchon vers le fond du tube 22, c'est-à-dire vers la droite dans le dessin. Une conduite 32 comportant une vanne 33 débouche au fond du tube et y amène un fluide sous pression qu'un joint 34 empêche de s'écouler vers l'orifice du tube. Une guillotine à commande électrique 35 est située au-dessus des parties fendues du tube et de l'arbre.

Le dispositif fonctionne comme suit. Tant que l'usinage se poursuit normalement, les fentes axiales 23 et 29 du tube et de l'axe restent alignées avec le fil, qui les traverse sans les toucher. Une rupture accidentelle du fil aura toujours lieu dans la zone d'usinage, c'est-à-dire sous le dispositif 42 dans le dessin. Lorsqu'une telle rupture se produit, le moteur 25 fait tourner l'axe 21 de manière à enrouler le fil ce qui produit une traction exercée sur la partie supérieure du fil. Cette traction redresse le fil et peut être exercée soit à froid - le fil est alors écroui - soit à chaud. Dans le second cas, le fil sera de préférence chauffé par passage d'un courant électrique amené par la borne D. Un tel courant peut aussi servir à obtenir un recuit du fil en dehors de la période où l'on exerce la traction.

La guillotine 35 est actionnée pour couper le fil afin de séparer la chute. Celle-ci est un morceau de fil suffisamment long se terminant au point de rupture et qui, par suite des tensions, de l'échauffement et de l'érosion qu'il a subi, est inutilisable pour un réenfilage et doit donc être éliminé. Lorsque l'axe 21 tourne, cependant que le tube 22 reste immobile, la chute, guidée par la fente de ce dernier, sera enroulée autour de l'axe, et la rotation sera poursuivie jusqu'à ce que toute la chute se trouve à l'intérieur du tube.

Ensuite le moteur 26 est actionné pour retracter le tube et l'axe vers la droite dans le dessin, de manière à amener la chute au-dessus d'une canalisation 36 pour l'évacuation des déchets. La vanne 33 est alors ouverte, et le liquide sous pression amené par la conduite 32 pousse le manchon d'évacuation vers la gauche. Celui-ci dégage la chute de la partie fendue de l'axe sur laquelle elle est enroulée, et la fait tomber dans la canalisation 36, soit uniquement sous l'effet de la gravitation soit par aspiration vers l'intérieur de cette canalisation. La partie vierge de fil en amont de la guillotine 35 peut maintenant être poussée, de manière connue dans le métier, vers le guide supérieur 3a du fil. Ceci peut se faire tant que le tube et l'axe sont encore rétractés, mais aussi après leur retour à la position indiquée dans la figure 2, à condition que la fente 29 de l'axe 21 ait été réorientée à la verticale pour laisser passer le fil. Il est d'ailleurs possible de donner à la fente du tube et/ou de l'axe une forme, en V par exemple, qui, lorsque tube et axe sont déplacés vers la gauche au-delà de leur position de repos, contribue à guider le fil coupé vers le guide 3b. Dans une autre variante, le manchon 27 sera longitudinalement fixe par rapport au logement 31 du dispositif et positionné de manière à dégager la chute de l'axe 21 lors du mouvement de retrait de ce dernier. Cette variante rend inutile la commande hydraulique du manchon, mais est d'application moins souple.

Les diverses phases de l'opération sont commandées et synchronisées par une unité de commande 40 (fig. 1). Lorsqu'un fil casse, le couple exercé par le moteur 4 baisse et un signal émis par ce dernier ou un circuit approprié est acheminé par le conducteur 41 vers le circuit 10 de commande d'avance de la pièce à usiner ainsi que vers l'unité de commande 40. Celle-ci initialise alors une séquence d'opérations préliminaires au réenfilage proprement dit et qui comprennent en particulier la découpe et l'éjection de la chute décrites ci-dessus, ainsi que l'étirage du fil. Un commutateur 44 commandé par l'unité 40 commande d'abord la découpe et l'éjection, puis l'étirage, qui est effectué de façon connue dans le métier. Cet étirage peut être effectué à froid ou à chaud. Dans le premier cas, il entraîne un écrouissage de la partie étirée du fil, ce qui peut être désirable pour certains matériaux, notamment ceux contenant du cuivre en proportion importante. Si, par contre, il est avantageux de chauffer le fil, le courant de chauffage nécessaire sera amené au fil par le conducteur 45. Pour faciliter le réenfilage proprement dit, on peut prévoir une unité 42 de guidage du fil comportant des organes de guidage rétractables 43.

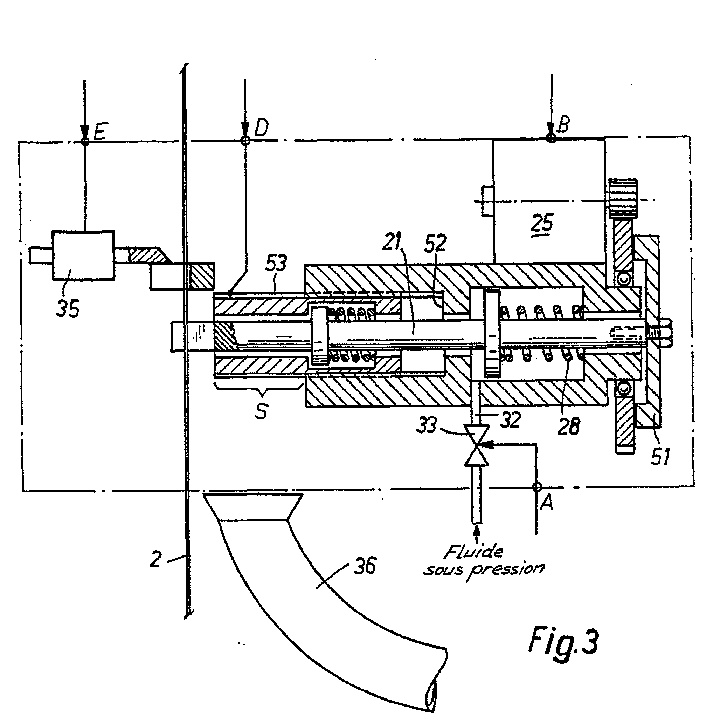

La figure 3 montre une variante du dispositif d'évacuation dans laquelle les organes analogues à ceux de la figure 2 portent les mêmes chiffres de référence. Dans cette variante, le tube coulissant 53 assure non seulement l'enroulement du déchet autour de l'arbre fendu 21, mais il sert aussi à dégager le déchet de l'arbre. A cet effet, le tube coulissant est épaissi sur une partie S de sa longueur qui glisse sur l'arbre fendu 21 de manière à pouvoir dégager le morceau de fil enroulé dessus, remplaçant ainsi le manchon d'évacuation immobile 27 de la figure 2. Le déplacement longitudinal du tube est provoqué conjointement à celui de l'arbre fendu 21 par le liquide amené par la conduite 32. Toutefois le déplacement du tube est arrêté par une butée 52 alors que l'arbre fendu continue son retrait provoquant ainsi l'éjection du déchet enroulé autour de l'arbre et son évacuation par le tube 36. Les autres opérations effectuées par le dispositif de la figure 3 sont analogues à celles décrites en relation avec la figure 2.

## Revendications

1. Procédé pour réenfiler un fil-électrode (2) dans une fente d'usinage (15) après la rupture de ce fil (2) au cours de la découpe par électroérosion d'une pièce-électrode (1), selon lequel successivement on étire ce fil (2) sur une longueur déterminée en vue de le redresser, on le coupe dans sa partie redressée, on fait avancer cette partie redressée du fil (2) à travers la fente d'usinage (15) et on reprend cette partie redressée du fil (2), par des moyens d'entraînement (6), caractérisé en ce qu'il consiste à engager le fil (2) en amont du point de rupture entre les branches d'une fourche rotative (29), à faire tourner celle-ci de manière à enrouler autour de cette fourche (29), toute la longueur de fil (2) comprise entre elle et le point de rupture, à exercer sur le fil (2) situé en amont de la fourche (29) et à l'aide de celle-ci une traction suffisante pour le redresser, à trancher le fil (2) à l'intérieur de sa partie redressée, à évacuer le déchet de fil (2) enroulé autour de la fourche (29) et à faire avancer la partie redressé du fil (2) à travers la fente d'usinage (15).

2. Procédé selon la revendication 1, caractérisé en ce qu'on effectue l'évacuation du déchet en dégageant celui-ci de la fourche pour l'éliminer par un conduit d'évacuation (36).

3. Procédé selon une des revendications précédentes, caractérisé en ce qu'on exerce un couple déterminé sur l'axe de la fourche (29) de manière à produire une traction sur le fil (2) pour son redressement.

4. Procédé selon une des revendications précédentes, caractérisé en ce qu'on applique la traction de redressage à froid.

5. Procédé selon une des revendications 1 à 3, dans lequel le redressage est effectué par un étirage à chaud du fil (2), caractérisé en ce que l'on amène le courant électrique de chauffage au fil par l'intermédiaire de la fourche (29) pendant son étirage.

6. Procédé selon une des revendications précédentes, caractérisé en ce qu'on guide le fil dans la zone située entre la fourche rotative (29) et la pièce (1) lors de son introduction dans la fente d'usinage (15) et de son avance à travers celle-ci.

7. Dispositif pour la mise en œuvre du procédé selon la revendication 1, comportant des moyens (4, 6) d'entraînement longitudinal du fil (2) situés en aval de la zone d'usinage, des moyens (5, 7) de freinage du fil placés en amont d'une zone de redressement du fil (2) située elle-même en amont de la zone d'usinage, des moyens (35) pour trancher le fil à l'intérieur de la zone de redressement et des moyens (42) pour introduire le bout redressé du fil (2) dans la fente d'usinage (15) et lui faire traverser celle-ci, caractérisé par une fourche rotative (29) située entre les moyens (5, 7) de freinage et la zone d'usinage, par des moyens (22, 24, 26) pour déplacer la fourche (29) par rapport au fil de manière à placer des branches de la fourche de part et d'autre du fil (2), des moyens (25) pour entraîner en rotation la fourche (29) autour de son axe, des moyens (27) pour dégager de la fourche le tronçon de fil (2) enroulé autour d'elle, et un circuit de commande (40) pour effectuer les déplacements de la fourche (29) et le dégagement du tronçon de fil (2) selon une séquence déterminée.

8. Dispositif selon la revendication 7, caractérisé en ce que l'axe de la fourche (29) est orienté transversalement au fil (2).

9. Dispositif selon une des revendications 7 ou 8, caractérisé par des moyens pour exercer un couple déterminé sur l'axe de la fourche (29) pour effectuer un écroissage du fil (2) entre les moyens (5, 7) de freinage et la fourche rotative (29).

10. Dispositif selon une des revendications 7 ou 8, caractérisé par des moyens pour exercer un couple déterminé sur l'axe de la fourche (29) pour effectuer un étirage à chaud du fil (2) entre les moyens (7) de freinage et la fourche rotative (29).

11. Dispositif selon une des revendications 7 à 10, caractérisé par des organes rétractables (43) de guidage du fil disposés entre la fourche rotative et la zone d'usinage.

## Patentansprüche

1. Verfahren zum Wiedereinfädeln eines Elektrodendrahtes (2) in einen Bearbeitungsspalt, nachdem dieser Draht (2) beim schneiden eines Werkstückes (1) durch Elektroerosion gerissen ist, gemäss welchem man nacheinander den Draht (2) längs einer bestimmten Drahtlänge streckt, um ihn gerade zu richten, diesen Draht (2) in seinem gerade gerichteten Teil schneidet, diesen Teil des Drahtes (2) in Längsrichtung durch den Bearbeitungsspalt (15) führt, und diesen Teil des Drahtes (2) durch Fördermittel wieder aufnimmt, dadurch gekennzeichnet, dass man den Draht (2) oberhalb der Bruchstelle zwischen die Zinken einer drehbaren Gabel (29) einführt, diese in Drehung versetzt, um ein Stück des Drahtes (2), dessen Länge mindestens gleich dem Abstand zwischen der Bruchstelle und der Gabel ist, auf die Gabel (29) zu wickeln, mittels der Gabel (29) auf den oberhalb derselben befindlichen Draht einen genügenden Zug ausübt um ihn gerade zu richten, den Draht (2) innerhalb seines geradegerichteten Teiles schneidet, den auf der Gabel (29) aufgewickelten Drahtabfall, welcher aus dem unterhalb der Schnittstelle gelegenen und bis zur Stelle wo der Draht gerissen ist reichenden Abschnitt des Drahtes (2) besteht, verschiebt, und den geradegerichteten Teil des Drahtes (2) durch den Bearbeitungsspalt (15) führt.

2. Verfahren nach Anspruch 1, dadurch gekennzeichnet, dass man den Drahtabfall wegschafft, indem man ihn von der Gabel ablöst, um ihn dann durch ein Entsorgungsrohr (36) wegzuschaffen.

3. Verfahren nach einem der vorangehenden Ansprüche, dadurch gekennzeichnet, dass man zum geraderichten des Drahtes (2) einen Zug auf diesen ausübt, indem man ein bestimmtes Drehmoment auf die Welle der Gabel (29) ausübt.

4. Verfahren nach einem der vorangehenden Ansprüche, dadurch gekennzeichnet, dass man den zum geraderichten verwendete Zug im kalten Zustand ausübt.

5. Verfahren nach einem der Ansprüche 1 bis 3, bei welchem das Geraderichten durch ein Strecken des Drahtes (2) im warmen Zustand erfolgt, dadurch gekennzeichnet, dass der elektrische Heizstrom dem Draht während seines Streckens über die Kabel (29) zugeführt wird.

6. Verfahren nach einem der vorangehenden Ansprüche, dadurch gekennzeichnet, dass der Draht während seines Einfädelns in den Bearbeitungsspalt (15) und seines Vorschubes durch diesen hindurch im Bereich zwischen der drehbaren Gabel (29) und dem Werkstück (1) geführt wird.

7. Vorrichtung zur Durchführung des Verfahrens nach Anspruch 1, mit unterhalb der Bearbeitungszone befindlichen Mitteln (4) zur Fortbewegung des Drahtes (2) in Längsrichtung, mit oberhalb einer Zone zum Geraderichten, welche sich selbst oberhalb der Bearbeitungszone befindet, liegenden Mitteln (7) zum Bremsen des Drahtes, mit Mitteln (35), um den Draht innerhalb der Geraderichtungszone zu schneiden, und mit Mitteln (42) um das geradegerichtete Ende des Drahtes (2) in den Bearbeitungsschlitz (15) einzuführen und durch diesen hindurchzuführen, gekennzeichnet durch eine zwischen den Bremsmitteln (7) und der Bearbeitungszone befindliche, drehbare Gabel (29), durch Mittel (22, 24, 26), um die Gabel (29) derart relativ zum Draht zu bewegen, dass Zinken der Gabel beidseitig des Drahtes (2) zu kommen, durch Mittel (25), um die Gabel (29) um ihre Achse zu drehen, durch Mittel (27), um den um die Gabel gewickelten Drahtabschnitt von diesen zu lösen, sowie durch einen Steuerkreis (40), um die Bewegungen an Gabel (29) und das Lösen des Drahtabschnittes in einer bestimmten Reihenfolge durchzuführen.

8. Vorrichtung nach Anspruch 7, dadurch gekennzeichnet, dass die Achse der Gabel (29) quer zum Draht (2) ausgerichtet ist.

9. Vorrichtung nach einem der Ansprüche 7 oder 8, gekennzeichnet durch Mittel, um auf die Welle der Gabel (29) ein bestimmtes Drehmoment auszuüben, um den Draht (2) zwischen den Bremsmitteln (7) und der drehbaren Gabel (29) zu recken.

10. Vorrichtung nach einem der Ansprüche 7 oder 8, gekennzeichnet durch Mittel, um auf die Welle der Gabel (29) ein bestimmtes Drehmoment auszuüben, um den Draht (2) zwischen den Bremsmitteln (7) und der drehbaren Gabel (29) warm zu strecken.

11. Vorrichtung nach einem der Ansprüche 7 bis 10, gekennzeichnet durch zwischen der drehbaren Gabel und der Bearbeitungszone befindliche, einziehbare Führungsorgane (43) für den Draht.

## Claims

1. Method for rethreading a wire electrode (2) through a machining slit (15) cut by said wire when the latter has been ruptured whilst cutting a workpiece (1) by electroerosion, where one successively stretches a given length of the wire (2) in order to straighten it, cuts the wire (2) within its straightened portion, moves this portion of the wire (2) through the machining slit (15), and grasps this portion of the wire (2) through conveying means, characterized in that upstream of the rupture point the wire (2) is engaged between the prongs of a rotatable fork (29), that the latter is made to rotate so as to wind a segment of the wire (2), which has a length at least equal to that between the rupture point and the fork, around said fork (29), a pull is exerted by means of the fork (29) on the wire (2) situated upstream of the fork, which pull is sufficient to straighten the wire, cutting the wire (2) with its straightened portion, displacing the scrap wire which is wound around the fork (29) and which consists of the segment of the wire (2) downstream of the point where it was cut, down to the point where it was ruptured, and advancing the straightened portion of the wire (2) through the machining slit (15).

2. Method according to claim 1, characterized in that one disposes of the scrap by disengaging it from the fork and evacuating it through an evacuation duct (36).

3. Method according to any preceding claim, characterized in that one applies a certain torque on the axis of the fork (29) so as to exert a pull on the wire (2) in order to straighten it.

4. Method according to any preceding claim, characterized in that the straightening pull is applied in the cold state.

5. Method according to one of claims 1 to 3, where the straightening is obtained by warm-stretching the wire (2), characterized in that the electrical heating current is transmitted to the wire through the fork (29) during the stretching of the wire.

6. Method according to one of the preceding claims, characterized that during the introduction of the wire into the machining slit (15) and its progress through the latter, the wire is guided in the zone located between the rotatable fork (29) and the workpiece (1).

7. Device for performing the method according to claim 1, with means (4) placed downstream of the machining zone for moving the wire (2) lengthwise, braking means (7) for the wire situated upstream of a wire straightening zone which itself lies upstream of the machining zone, means (35) for cutting the wire within the straightening zone, and means (42) for introducing the straightened extremity of the wire (2) into the machining zone (15) and make it traverse the latter, characterized by: a rotatable fork (29) placed between the braking means (7) and the machining zone, means (22, 24, 26) for displacing the fork (29) with respect to the wire so as to place prongs of the fork on either side of the wire (2), means (25) to bring about a rotation of the fork (29) around its axis, means (27) to disengage the fork from the wire segment wound around it, and a command circuit (40) to activate the displacements of the fork (29) and the disengagement of the wire segment according to a predetermined sequence.

8. Device according to claim 7, characterized in that the axis of the fork (29) is oriented transversally to the wire (2).

9. Device according to one of claims 7 and 8, characterized by means for applying a predetermined torque to the axis of the fork (29) in order to cold-stretch the wire (2) between the braking means (7) and the rotatable fork (29).

10. Device according to claim 7 or 8, characterized by means for applying a predetermined torque to the axis of the fork (29) in order to perform a warm draw-out of the wire (2) between the braking means (7) and the rotatable fork (29).

11. Device according to one of claims 7 through 10, characterized in that it comprises retractable guides (43) for the wire located between the rotatable fork and the machining zone.

EP 0 201 773 B1

Fig.1

Fluide
sous pression

Fig. 2

Fluide
sous pression

Fig.3